# EUROPEAN PATENT APPLICATION

(11) **EP 2 755 294 A1**
(43) Date of publication of application: **16.07.2014**
(21) Application number: 12829670.4
(22) Date of filing: 06.09.2012
(51) Int. Cl.: H02J 7/00, H01M 10/44, H02M 3/28, H02M 7/48

(54) **CHARGE STORAGE SYSTEM, CHARGING/DISCHARGING CIRCUIT, AND UTILITY INTERCONNECTION DEVICE**

(30) Priority: 09.09.2011 JP 2011197412; 09.09.2011 JP 2011197413
(71) Applicant: Sanyo Electric Co., Ltd., Moriguchi-shi, Osaka 570-8677 (JP)
(72) Inventor: HIRATA Toshiyuki, Moriguchi-shi Osaka 570-8677 (JP); ESAKA Koichiro, Moriguchi-shi Osaka 570-8677 (JP); FUKUDA Daisuke, Moriguchi-shi Osaka 570-8677 (JP)
(74) Representative: Appelt, Christian W.
(86) International application number: PCT/JP2012/072778
(87) International publication number: WO 2013/035801

(57) **Abstract**

Problem: An object is to achieve a charging/discharging circuit using an element with low voltage endurance, and to provide a charge storage system, the charging/discharging circuit and a utility interconnection device at low cost.

Solution: A charge storage system 3 includes: a storage 30; and a charging/discharging circuit 31 configured to perform charging and discharging of the storage 30 via a transformer 40. The charge storage system 3 is connected to a device configured to convert DC power output from a DC power supply 1 into AC power and configured to output the converted AC power, and is configured to charge the DC power into the storage 30. The transformer 40 includes: a power source-side winding 41 to which the DC power is input; and a storage-side winding 51 connected to the storage 30, and the charging/discharging circuit 31 is configured to change a turn ratio between the power source-side winding 41 and the storage-side winding 51 (= (the number of turns of the power source-side winding 41)/(the number of turns of the storage-side winding 51)) such that the turn ratio at the charging of the storage 30 is larger than the turn ratio at the discharging of the storage.

## Description

### Technical Field

The present invention relates to a charge storage system, a charging/discharging circuit, and a utility interconnection device.

### Background Art

In recent years, there is proposed a utility interconnection system which uses both a storage (battery) and a DC power source based on renewable energy, such as a solar cell or a wind power generator, which converts DC power output from this type of DC power source into AC power by using a utility interconnection device, and which interconnects the converted AC power to a commercial power utility (Patent Document 1).

### Related Art Documents

### Patent Documents

Patent Document 1: JP-A-2001-37226

### Summary of the Invention

### Problem to be Solved by the Invention

The storage of the above utility interconnection system is connected to a line that connects the DC power source and the utility interconnection device, via a charging/discharging circuit. The storage charges the DC power output from the DC power source and appropriately discharges the accumulated power to the utility interconnection device, using the charging/discharging circuit.

As the charging/discharging circuit, a charging/discharging circuit that uses a transformer that insulates the DC power source and the storage is used. The transformer includes a power source-side winding to which the DC power output from the DC power source is input, and a storage-side winding connected to the storage. Further, the charging/discharging circuit includes switch elements that are provided in series on the respective windings, and diodes that are connected reversely in parallel to the respective switch elements. The charging/discharging of the storage is performed by a connection/disconnection control of the switch elements.

### Means for Solving the Problem

However, in a case where the charging/discharging circuit that uses the above-mentioned transformer is used, when the diode or the switch element connected to the storage-side winding is selected, it is necessary to select an element having a voltage endurance that is equal to or larger than a value obtained by adding a voltage applied to the storage-side winding and a voltage of the storage when the storage is charged (for example, about 1.2 times to 3 times the value). If the element with high voltage endurance is used, the element becomes expensive, and the cost of the charge storage system, the charging/discharging circuit and the entire utility interconnection device is increased.

An object of the invention is to achieve a charging/discharging circuit using an element with low voltage endurance, and to provide a charge storage system, the charging/discharging circuit and a utility interconnection device at low cost.

In order to achieve the object, a charge storage system includes: a storage; and a charging/discharging circuit configured to perform charging and discharging of the storage via a transformer. In the charge storage system, the charging/discharging circuit is connected to a device configured to convert DC power into AC power and output the converted AC power, and is configured to charge the DC power into the storage, the transformer comprises: a power source-side winding to which the DC power is input; and a storage-side winding connected to the storage, and the charging/discharging circuit is configured to change a turn ratio between the power source-side winding and the storage-side winding (= (the number of turns of the power source-side winding)/(the number of turns of the storage-side winding)) such that the turn ratio at the charging of the storage is larger than the turn ratio at the discharging of the storage.

### Advantages of the Invention

According to the invention, it is possible to achieve a charging/discharging circuit using an element with low voltage endurance, and to provide a charge storage system, the charging/discharging circuit, and a utility interconnection device at low cost.

### Brief Description of the Drawings

Fig. 1 is a configuration diagram illustrating a solar power generation system in a first embodiment.
Fig. 2 is a configuration diagram illustrating a utility interconnection device in the first embodiment.
Fig. 3 is a configuration diagram illustrating a charge storage system in the first embodiment.
Fig. 4 is a flow diagram illustrating an operation of a charging/discharging circuit when a commercial power utility performs power supply, in the first embodiment.
Fig. 5 is a flow diagram illustrating an operation of the charging/discharging circuit when the commercial power utility stops the power supply, in the first embodiment.
Fig. 6 is a configuration diagram illustrating a charge storage system in a second embodiment.
Fig. 7 is a configuration diagram illustrating a charge storage system in a third embodiment.
Fig. 8 is a configuration diagram illustrating a charge storage system in a fourth embodiment.
Fig. 9 is a configuration diagram illustrating a solar power generation system 100a in a fifth embodiment.

### Mode for Carrying Out the invention

### (First embodiment)

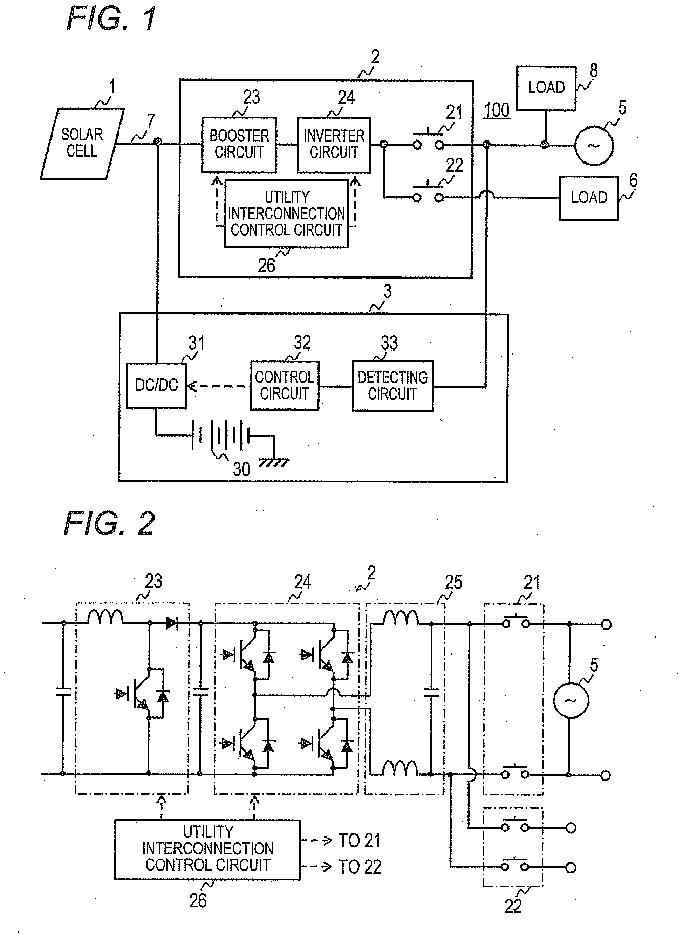

Hereinafter, a first embodiment of the invention will be described in detail with reference to the accompanying drawings. Fig. 1 is a configuration diagram illustrating a solar power generation system 100 according to the first embodiment.

The solar power generation system 100 includes a solar cell 1, a utility interconnection device 2, and a charge storage system 3.

In the solar cell 1, the amount of generated power is changed according to the amount of solar radiation. Further, the solar cell 1 has plural single-cell solar batteries, and is configured by serial connection and/or parallel connection of the plural single-cell solar batteries. For example, the solar cell 1 has a maximum voltage of 300 V or 380 V, a rated voltage of 200 V or 250 V, an output of 2.4 kW or 4.8 kW, and the like.

The utility interconnection device 2 receives DC power output from the solar cell 1 as an input, converts the input DC power into AC power, adds the AC power to a commercial power utility 5 via a utility interconnection relay 21, and supplies the power to a load 8 (interconnecting operation). Further, when the commercial power utility 5 stops the power supply, the utility interconnection device 2 receives the DC power output from the solar cell 1 and/or the charge storage system 3 as an input, converts the input DC power into AC power, and supplies the AC power to a load 6 via an autonomous operation relay 22 (autonomous operation). The utility interconnection device 2 has a function of detecting the stoppage of power supply of the commercial power utility 5 and automatically switching the interconnecting operation and the autonomous operation. The switching of the interconnecting operation and the autonomous operation of the utility interconnection device 2 may be manually performed after the utility interconnection device 2 detects the stoppage of power supply and stops its operation. Fig. 2 is a configuration diagram illustrating the utility interconnection device 2 in the first embodiment.

The utility interconnection device 2 includes a booster circuit 23, an inverter circuit 24, a filter circuit 25, a utility interconnection control circuit 26, the utility interconnection relay 21 and the autonomous operation relay 22.

As shown in Fig. 2, the booster circuit 23 is configured by a booster chopper circuit having a reactor, a switch element and a diode, and controls a duty ratio of the switch element to boost the DC power input to the utility interconnection device 2 to a desired power.

The inverter circuit 24 is configured by plural switch elements that are connected to form a full bridge. By PWM-controlling the switch elements, DC power output from the booster circuit 23 is converted into AC power. The inverter circuit 24 outputs the converted AC power to the filter circuit 25.

The filter circuit 25 is configured by two reactors and a capacitor, and removes a high frequency component of the AC power output from the inverter circuit 24. The AC power from which the high frequency component is removed is output to the commercial power utility via the utility interconnection relay 21 or is output to the load 6 via the autonomous operation relay 22.

The utility interconnection control circuit 26 controls the operations of the booster circuit 23, the inverter circuit 24, the utility interconnection relay 21 and the autonomous operation relay 22. The utility interconnection control circuit 26 determines whether the commercial power utility 5 stops the power supply in start-up. If it is determined that the commercial power utility 5 stops the power supply, the utility interconnection control circuit 26 opens the utility interconnection relay 21 and closes the autonomous operation relay 22 to perform the autonomous operation. Further, if the commercial power utility 5 performs the power supply, the utility interconnection control circuit 26 closes the utility interconnection relay 21 and opens the autonomous operation relay 22 to perform the interconnecting operation.

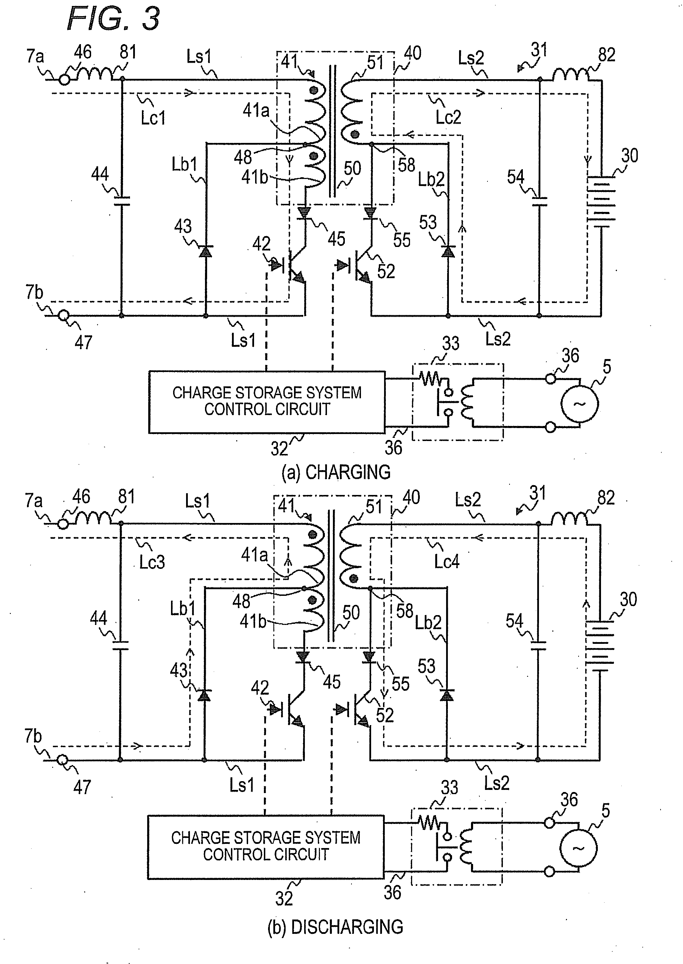

The charge storage system 3 is used as an auxiliary power source that performs discharging in a case where output power of the solar cell 1 is insufficient, at the time of the power outage, to supply power to the utility interconnection device 2. Thus, when the commercial power utility 5 performs the power supply, the charge storage system 3 performs charging using the output power of the solar cell 1, but does not perform discharging to the utility interconnection device. Fig. 3 is a configuration diagram illustrating the charge storage system 3 in the first embodiment.

The charge storage system 3 includes a storage (battery) 30, a charging/discharging circuit 31, a charge storage system control circuit 32 and a power outage detecting circuit 33.

Since the storage 30 is used as the auxiliary power source, for example, a cheap battery such as a lead storage battery may be used. Further, the storage 30 may be configured by serial connection and/or parallel connection of single-batteries so that a rated voltage thereof is 12 [V] to 240 [V] lower than the maximum voltage of the solar cell 1.

The charging/discharging circuit 31 performs charging and discharging of the storage 30 via a transformer 40. The transformer 40 includes a power source-side winding 41 to which the DC power output from the solar cell 1 is input, and a storage-side winding 51 connected to the storage 30. Further, two windings 41 and 51 are wound on a common core 50. Further, when the turn ratio between the power source-side winding 41 and the storage-side winding 51 is expressed as "(the number of turns of the power source-side winding 41)/(the number of turns of the storage-side winding 51)", the charging/discharging circuit 31 is configured so that the turn ratio at the charging of the storage is larger than the turn ratio at the discharging of the storage 30.

Specifically, the power source-side winding 41 of the charging/discharging circuit 31 uses a winding including two windings 41 a and 41b which are connected in series. The charging/discharging circuit 31 includes a series line Ls1 on which the power source-side winding 41 and the switch element 42 are connected in series via a diode 45. Further, an end 46 (on the side of the power source-side winding 41) and the other end 47 (on the side of the switch element 42) of the series line Ls1 are respectively connected to a positive-side line 7a and a negative-side line 7b for the DC power supplied from the solar cell 1. Further, a smoothing reactor 81 is provided on one end side of the series line Ls1.

The charging/discharging circuit 31 includes a bypass line Lb1 that connects a connection point 48 of two windings 41 a and 41 b to the solar cell 1 (the series line Ls1) while bypassing the switch element 42, the diode 45 and the winding 41 b. One end of the bypass line Lb1 is connected to the connection point 48, and the other end thereof is connected to the negative-side line 7b. A diode 43 that causes electric current to flow from the negative-side line 7b to the positive-side line 7a is provided on the bypass line Lb1. That is, an anode of the diode 43 is connected to the negative-side line 7b, and a cathode of the diode 43 is connected to the connection point 48.

The charging/discharging circuit 31 includes a series line Ls2 in which the storage-side winding 51 and the switch element 52 are connected in series via a diode 55. Further, one end (on the side of the storage-side winding 51) of the series line Ls2 and the other end thereof (on the side of the switch element 52) are respectively connected to the positive terminal and the negative terminal of the storage 30. Further, a smoothing reactor 82 is formed on one end side of the series line Ls2.

The charging/discharging circuit 31 includes a bypass line Lb2 that connects a connection point 58 of the storage-side winding 51 and the diode 55 to the storage 30 (the series line Ls2) while bypassing the switch element 52 and the diode 55. One end of the bypass line Lb2 is connected to the connection point 58, and the other end thereof is connected to the negative terminal of the storage 30. A diode 53 that causes electric current to flow from the negative terminal of the storage to the positive terminal thereof is provided on the bypass line Lb2. That is, an anode of the diode 53 is connected to the negative terminal of the storage 30, and a cathode of the diode 53 is connected to the connection point 58.

When the storage 30 is charged, the charging/discharging circuit 31 performs charging using both of two windings 41 a and 41 b. Specifically, when the storage 30 is charged, the switch element 42 is periodically connected or disconnected (to input a PWM signal to the switch element 42) to periodically conduct electric current of two windings 41 a and 41 b, and the switch element 52 is disconnected. Here, the PWM signal is created so that the output voltage from the solar cell 1 is decreased to a voltage slightly higher than the voltage of the storage 30. In this configuration, as shown in Fig. 3(a), if the electric current flows in the series line Ls1 as shown (if the electric current flows through a path of a dashed line Lc1), the electric current flows on the bypass line Lb2 and the series line Ls2 while bypassing the switch element 52 and the diode 55 of the series line Ls2 (the electric current flows through a path of a dashed line Lc2), and thus, the storage 30 is charged. In the charging, a constant current charging in which the electric current that flows in the storage 30 is constant is performed until the voltage of the storage 30 reaches a predetermined voltage value, and if the voltage is larger than the predetermined voltage value, a constant voltage charging in which the voltage applied to the storage 30 is constant is performed.

When the storage 30 is discharged, the discharging is performed using one winding 41 a among two windings 41 a and 41 b. When the storage 30 is discharged, the switch element 52 is periodically connected or disconnected (to input a PWM signal to the switch element 52) to periodically conduct electric current of the storage-side winding 51, and the switch element 42 is disconnected. Here, the PWM signal is input so that the output voltage from the storage 30 is approximately equal to the operating voltage of the solar cell 1. In this configuration, as shown in Fig. 3(b), if the electric current flows on the series line Ls2 (if the electric current flows through a path of a dashed line Lc4), the electric current flows on the bypass line Lb1 and the series line Ls1 while bypassing the switch element 42 and the diode 45 of the series line Ls1 (the electric current flows through a path of a dashed line Lc3), and thus, the storage 30 is discharged. Due to this discharging, power accumulated in the storage 30 is supplied to the utility interconnection device 2. The discharging is performed so that an output current of the storage 1 is constant, and is controlled so that an output voltage is not higher than a predetermined voltage (a threshold value tph which will be described later).

An electromagnetic relay is used in the power outage detecting circuit 33. An AC relay that is supplied with a driving power from the commercial power utility 5 is used as the electromagnetic relay. The AC relay is connected to the commercial power utility 5, and is supplied with AC power. If the power is supplied from the commercial power utility 5, the AC relay opens an armature, and if the power is not supplied, the AC relay closes the armature. The armature is connected to the charge storage system control circuit 32 via the signal line 36, and the charge storage system control circuit 32 detects electric current that flows as the armature is closed, to detect the stoppage of power supply. Further, conversely, the charge storage system control circuit 32 detects that the commercial power utility 5 performs the power supply when the electric current does not flow.

The charge storage system control circuit 32 controls the operation of the charging/discharging circuit 31. The operation of the charging/discharging circuit 31 is divided into (1) a case where the commercial power utility performs the power supply and (2) a case where the commercial power utility stops the power supply.

### (Operation when commercial power utility performs the power supply)

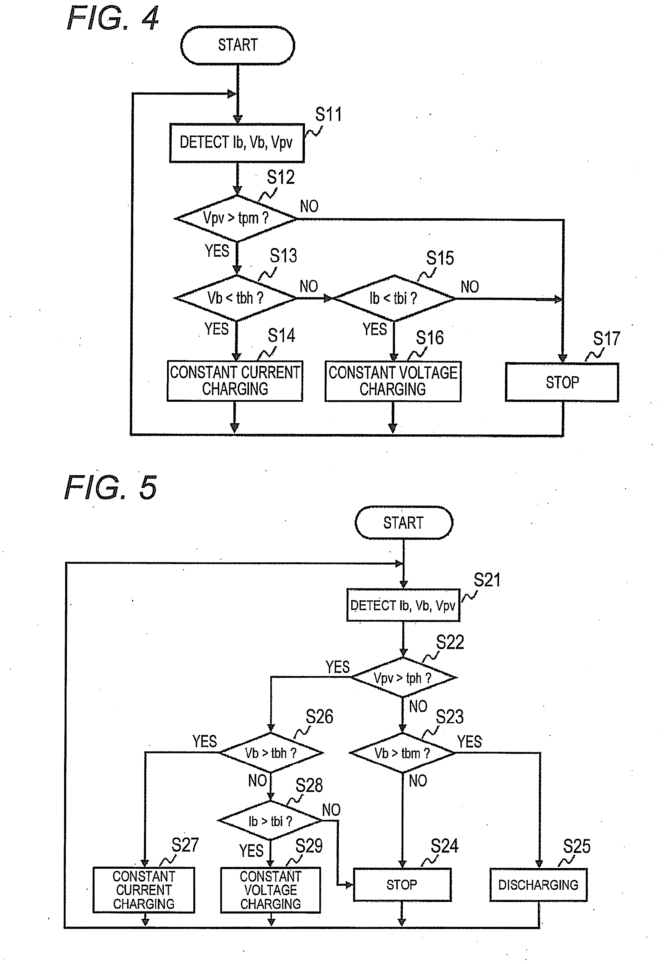

If the power supply of the commercial power utility 5 is detected by the power outage detecting circuit 33, the charge storage system control circuit 32 determines the operation of the charging/discharging circuit (whether to perform the charging or to stop), on the basis of a voltage Vb of the storage 30 and a voltage Vpv of the solar cell 1. Fig. 4 is a flow diagram illustrating the operation of the charging/discharging circuit 31 when the commercial power utility 5 performs the power supply.

As shown in Fig. 4, if the power supply of the commercial power utility 5 is detected by the power outage detecting circuit 33, the charge storage system control circuit 32 detects the voltage Vb of the storage 30, a current Ib of the storage 30, and the voltage Vpv of the solar cell 1 (step S11). Further, the charge storage system control circuit 32 compares the voltage Vpv of the solar cell 1 with a threshold value tpm. If the voltage Vpv of the solar cell 1 is higher than the threshold value tpm, the procedure goes to step S13, and if the voltage Vpv of the solar cell 1 is lower than the threshold value tpm, the procedure goes to step S17. Here, the threshold value tpm represents a voltage at which the storage 30 can be charged by the solar cell 1, which is a value higher than the rated voltage of the storage 30.

In step S13, the charge storage system control circuit 32 compares the voltage Vb of the storage 30 with a threshold value tbh. If the voltage Vb of the storage 30 is higher than the threshold value tbh, the procedure goes to step S15, and if the voltage Vb of the storage 30 is lower than the threshold value tbh, the procedure goes to step S14. Here, the threshold value tbh represents a voltage at which the switching from the constant current charging to the constant voltage charging can be performed.

In step S14, the charge storage system control circuit 32 performs the constant current charging for the storage 30, and the procedure then returns to step S11. Further, in step S15, the charge storage system control circuit 32 compares the current Ib of the storage 30 with a threshold value tbi. If the current Ib of the storage 30 is larger than the threshold value tbi, the procedure goes to step S16, and if the current Ib of the storage 30 is smaller than the threshold value tbi, the procedure goes to step S17. Here, the threshold value tbi represents a current threshold value when the charging is completed in a case where the constant voltage charging is performed.

In step S16, the charge storage system control circuit 32 performs the constant voltage charging for the storage 30, and the procedure then returns to step S11. Further, in step S17, the charge storage system control circuit 32 stops the operation of the charging/discharging circuit 31, and the procedure returns to step S11. The stop of the operation of the charging/discharging circuit 31 is performed by disconnecting both the switch element 42 and the switch element 52. Thus, the charging/discharging circuit 31 enters a state where both the charging and the discharging are not performed (an operation stop state).

As described above, when the commercial power utility 5 is in the power supply state, the charge storage system control circuit 32 controls the charging/discharging circuit 31 to enter either of the charging state or the operation stop state, to thereby prohibit the discharging regardless of the power generation state of the solar cell 1 or the charging state of the storage 30. Specifically, the charging/discharging circuit 31 performs the charging when the voltage Vpv of the solar cell 1 is the voltage tpm at which the storage 30 can be charged and the voltage Vb of the storage 30 is lower than the voltage tbh indicating full charging. Conversely, in other cases, that is, in a case where the voltage of the solar cell is lower than the voltage tpm at which the storage 30 can be charged, or in a case where the voltage Vb of the storage 30 is higher than the voltage tbh indicating the full charging, the charging/discharging circuit 31 stops the operation.

### (Operation when commercial power utility stops the power supply)

If the power outage of the commercial power utility 5 is detected by the power outage detecting circuit 33, the charge storage system control circuit 32 determines the operation of the charging/discharging circuit 31 on the basis of the voltage Vb of the storage 30 and the voltage Vpv of the solar cell 1. Fig. 5 is a flow diagram illustrating the operation of the charging/discharging circuit 31 when the commercial power utility 5 stops the power supply.

As shown in Fig. 5, if the power outage of the commercial power utility 5 is detected by the power outage detecting circuit 33, the charge storage system control circuit 32 detects the voltage Vb of the storage 30 and the voltage Vpv of the solar cell (step S21). Further, the charge storage system control circuit 32 compares the voltage Vpv of the solar cell 1 with the threshold value tph. If the voltage Vpv of the solar cell 1 is higher than the threshold value tph, the procedure goes to step S26, and if the voltage Vpv of the solar cell 1 is smaller than the threshold value tph, the procedure goes to step S23 (step S22). Here, the threshold value tph represents a voltage at which power can be sufficiently supplied to the connected load 6 by the DC power output from the solar cell 1. The threshold value tph has a value larger than the threshold value tpm.

In step S23, the charge storage system control circuit 32 compares the voltage Vb of the storage 30 with the threshold value tbm. If the voltage Vb of the storage 30 is higher than the threshold value tbm, the discharging of the storage 30 is performed by the charging/discharging circuit 31 (step S25), and then, the procedure returns to step S21. If the voltage Vb of the storage 30 is smaller than the threshold value tbm, the charging/discharging circuit 31 stops the operation (step S24), and then, the procedure returns to step S21. Here, the threshold value tbm represents a value of a voltage when the storage 30 reaches a discharge limit.

In step S26, the charge storage system control circuit 32 compares the voltage Vb of the storage 30 with the threshold value tbh. If the voltage Vb of the storage 30 is higher than the threshold value tbh, the procedure goes to step S28. If the voltage Vb of the storage 30 is smaller than the threshold value tbh, the charging/discharging circuit 31 performs the constant current charging for the storage 30 (step S27), and then, the procedure returns to step S21.

In step S28, the charge storage system control circuit 32 compares the current Ib of the storage 30 with the threshold value tbi. If the current Ib of the storage 30 is higher than the threshold value tbi, the procedure goes to step S29. If the current Ib of the storage 30 is smaller than the threshold value tbi, the procedure goes to step S24. In step S29, the charge storage system control circuit 32 performs the constant voltage charging for the storage 30, and then, the procedure returns to step S21. In step S24, the charge storage system control circuit 32 stops the operation of the charging/discharging circuit 31, and then, the procedure returns to step S21.

As described above, when the commercial power utility 5 is in the power outage state, the charge storage system control circuit 32 controls the charging/discharging circuit 31 to enter any one of the charging states (constant current charging or constant voltage charging), the operation stop state and the discharging state. Specifically, the charging/discharging circuit 31 stops the operation when the power necessary for the load 6 can be supplied by the power output from the solar cell 1 ("Vpv>tph") and the storage 30 is in the full charging ("Vb>tbh"), and performs the charging when the charging of the storage 30 is not sufficient ("Vb<tbh" or "Vb>tbh and Ib<tbi").

The charging/discharging circuit 31 stops operating when the power necessary for the load 6 cannot be supplied by the power output from the solar cell 1 ("Vpv<tph") and the storage 30 reaches the charge limit ("Vb<tbm"), and discharges the storage 30 when the storage 30 can be discharged ("Vb>tbm").

According to the first embodiment, when the turn ratio between the power source-side winding 41 and the storage-side winding 51 is expressed as "(the number of turns of the power source-side winding 41)/(the number of turns of the storage-side winding 51)", the charging/discharging circuit 31 is configured so that the turn ratio at the charging of the storage 30 is larger than the turn ratio at the discharging of the storage 30. Thus, it is possible to reduce the voltage applied to the storage-side winding 51 when the storage 30 is charged. Thus, it is possible to reduce the voltage endurance of the switch element 52, the diode 53 or the like connected to the storage-side winding 51, and to form a charge storage system using a cheap element.

Further, since the configuration in which the rated voltage of the storage is lower than the maximum voltage of the solar cell used, particularly, it is possible to reduce the pressure tightness of the switch element 52 or the diode 53 connected to the storage-side winding 51. Further, if the pressure tightness of the storage-side winding 51 is reduced, ON resistance of the switch element 52 is reduced, and thus, loss in the switch element 52 when the storage 30 is discharged is reduced, which improves the efficiency when the storage 30 is discharged.

### (Second embodiment)

In the first embodiment, the winding in which two windings 41 a and 41 b are connected in series is used as the power source-side winding 41, but in a second embodiment, a winding including two windings 51a and 51b which are connected in series is used as the storage-side winding 51. With this configuration, the turn ratio at the charging of the storage 30 becomes larger than the turn ratio at the discharging of the storage 30. Hereinafter, the second embodiment will be described. Since the second embodiment is the same as in the first embodiment except that the winding in which two windings 51 a and 51 b are connected in series is used as the storage-side winding 51, the different points will be mainly described.

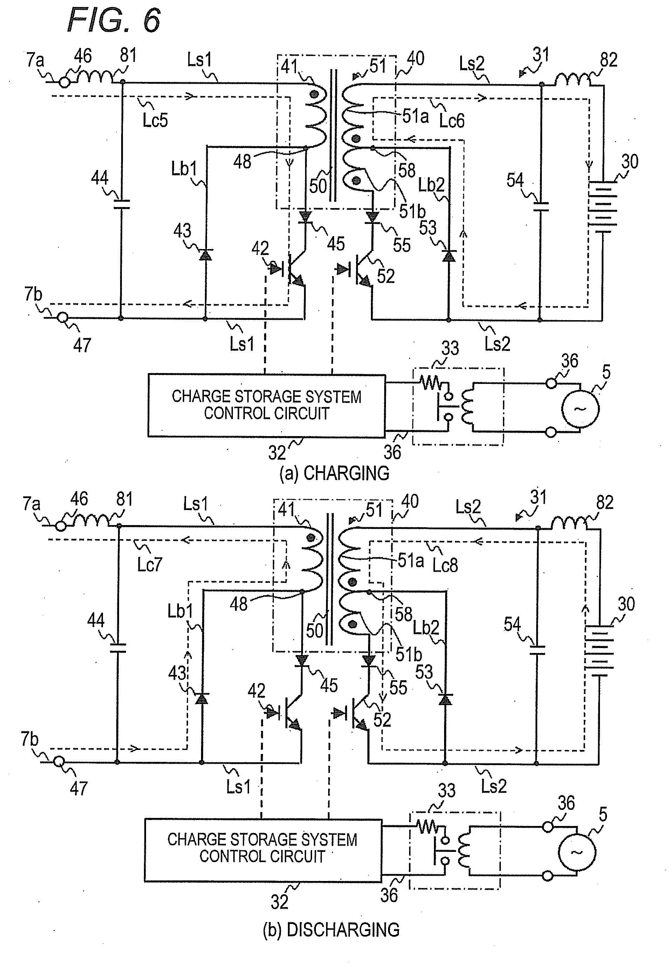

Fig. 6 is a diagram illustrating a charge storage system in the second embodiment. As shown in Fig. 6, the charging/discharging circuit 31 includes the series line Ls1 in which the power source-side winding 41 and the switch element 42 are connected in series via the diode 45. Further, one end 46 (on the side of the power source-side winding 41) and the other end 47 (on the side of the switch element 42) of the series line Ls1 are respectively connected to the positive-side line 7a and the negative-side line 7b for the DC power supplied from the solar cell 1. Further, the smoothing reactor 81 is provided on one end side of the series line Ls1.

The charging/discharging circuit 31 includes the bypass line Lb1 that connects the connection point 48 of the power source-side winding 41 and the diode 45 to the solar cell 1 (the series line Ls1) while bypassing the switch element 42 and the diode 45. One end of the bypass line Lb1 is connected to the connection point 48, and the other end thereof is connected to the negative-side line 7b. The diode 43 that causes electric current to flow from the negative-side line 7b to the positive-side line 7a is provided on the bypass line Lb1. That is, the anode of the diode 43 is connected to the negative-side line 7b, and the cathode of the diode 43 is connected to the connection point 48.

The storage-side winding 51 of the charging/discharging circuit 31 uses the winding in which two windings 51 a and 51 b are connected in series. The charging/discharging circuit 31 includes the series line Ls2 on which the storage-side winding 51 and the switch element 52 are connected in series via the diode 55. Further, one end (on the side of the storage-side winding 51) and the other end (on the side of the switch element 52) of the series line Ls2 are respectively connected to the positive terminal and the negative terminal of the storage 30. Further, the smoothing reactor 82 is provided on one end side of the series line Ls2.

The charging/discharging circuit 31 includes the bypass line Lb2 that connects the connection point 58 of two windings 51 a and 51 b to the storage 30 (the series line Ls2) while bypassing the switch element 52, the diode 55 and the winding 51b. One end of the bypass line Lb2 is connected to the connection point 58, and the other end thereof is connected to the negative terminal of the storage 30. The diode 53 that causes electric current to flow from the negative terminal of the storage to the positive terminal thereof is provided on the bypass line Lb2. That is, the anode of the diode 53 is connected to the negative terminal of the storage 30, and the cathode of the diode 53 is connected to the connection point 58.

When the storage 30 is charged, the charging/discharging circuit 31 performs charging using one winding 51 a among two windings 41a and 41b. Specifically, when the storage 30 is charged, the switch element 42 is periodically connected or disconnected (to input a PWM signal to the switch element 42) to periodically conduct electric current of the power source winding 41, and the switch element 52 is disconnected. Here, the PWM signal is created so that the output voltage from the solar cell 1 is decreased to a voltage slightly higher than the voltage of the storage 30. In this configuration, as shown in Fig. 6(a), if the electric current flows on the series line Ls1 (if the electric current flows through a path of a dashed line Lc5), the electric current flows on the bypass line Lb2 and the series line Ls2 while bypassing the switch element 52, the diode 55 and the winding 51 b of the series line Ls2 (the electric current flows through a path of a dashed line Lc6), and thus, the storage 30 is charged. The charging is performed so that the constant current charging in which the electric current that flows in the storage 30 is constant is performed until the voltage of the storage 30 reaches a predetermined voltage value, and when the voltage is larger than the predetermined voltage value, the constant voltage charging in which the voltage applied to the storage 30 is constant is performed.

When the storage 30 is discharged, the discharging is performed using two windings 51 a and 51 b. When the storage 30 is discharged, the switch element 52 is periodically connected or disconnected (to input a PWM signal to the switch element 52) to periodically conduct electric current of the storage-side winding 51, and the switch element 42 is disconnected. Here, the PWM signal is input so that the output voltage from the storage 30 is approximately equal to the operating voltage of the solar cell 1. In this configuration, as shown in Fig. 6(b), if the electric current flows on the series line Ls2 (if the electric current flows through a path of a dashed line Lc7), the electric current flows on the bypass line Lb1 and the series line Ls1 while bypassing the switch element 42 and the diode 45 of the series line Ls1 (the electric current flows through a path of a dashed line Lc8), and thus, the storage 30 is discharged. Due to this discharging, power accumulated in the storage 30 is supplied to the utility interconnection device 2. The discharging is performed so that an output current of the storage 1 is constant, and is controlled so that an output voltage is not higher than a predetermined voltage (a threshold value tph which will be described later).

### (Third embodiment)

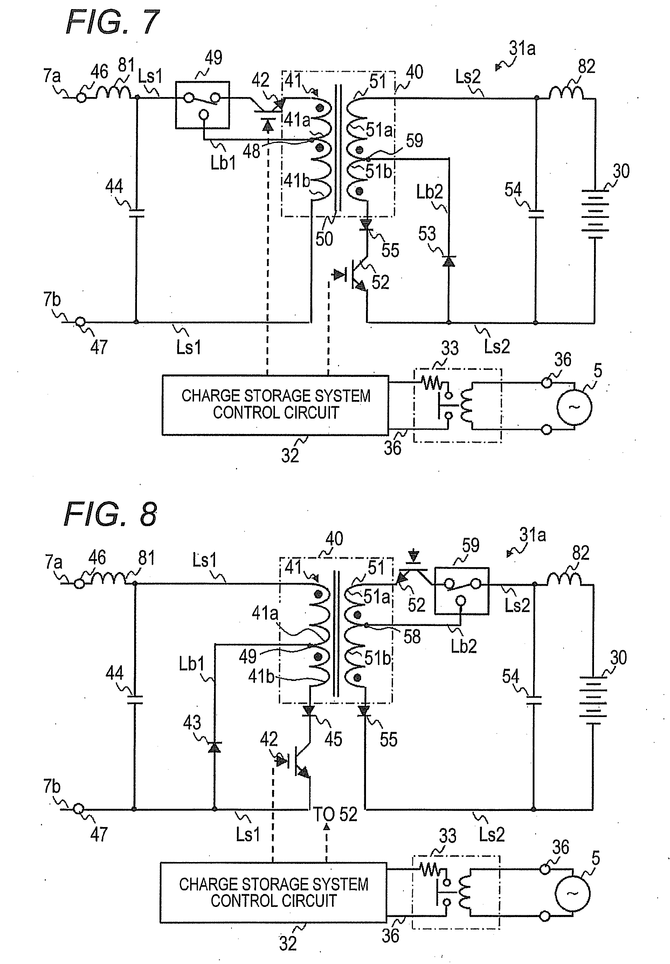

A modification example of the charging/discharging circuit 31 of the first embodiment will be described as a third embodiment. Fig. 7 is a configuration diagram illustrating a charge storage system 3a in the third embodiment. A charging/discharging circuit 31 a of the charge storage system 3a is different from the charging/discharging circuit 31 of the first embodiment in the following two points (A) and (B). Since configurations other than the different points (A) and (B) may be the same as in the other embodiments, the different points will be mainly described.

(A) In the first embodiment, the switch element 42 is provided on the negative-side line 7b and the power source-side winding 41 is provided on the positive-side line 7a, but in the second embodiment, the switch element 42 is provided on the positive-side line 7a and the power source-side winding 41 is provided on the negative-side line 7b. In this case, the bypass line Lb1 is connected to the connection point 48 at one end thereof and is connected to the positive-side line 7a at the other end thereof (via a switch circuit 49 which will be described later) to bypass the winding 41 a and the switch element 41.

(B) In the first embodiment, when the storage 30 is discharged, the electric current flows on the bypass line Lb1 using the diode 43, but in the second embodiment, the switch circuit 49 is provided and the electric current flows on the bypass line Lb1. Specifically, the switch circuit 49 is configured by an electromagnetic relay or the like that performs switching between two connection points, and switches the connection of the positive-side line 7a and the series line Ls1 (in charging) and the connection of the positive-side line 7a and the bypass line Lb1 (in discharging). Thus, it is possible to remove the diode 43 provided in the bypass line Lb1, and to reduce loss due to the diode 43 when the storage 30 is discharged.

The change of (B) is performed by switching the connection of the positive-side line 7a and the series line Ls1 (in charging) and the connection of the positive-side line 7a and the bypass line Lb1 (in discharging) according to the change of (A), but may be applied to the first embodiment where the change of (A) is not present. In this case, since the other end of the bypass line Lb1 is connected to the negative-side line 7b, the switch circuit switches the connection of the negative-side line 7b and the series line Ls1 (in charging) and the connection of the negative-side line 7b and the bypass line Lb1 (in discharging).

In this way, when the modifications shown in (A) and (B) are performed, the turn ratio at the charging of the storage 30 is similarly larger than the turn ratio at the discharging of the storage 30. Thus, it is possible to reduce the voltage endurance of the switch element, the diode or the like connected to the storage-side winding 51. Further, it is possible to form the charge storage system 3a using a cheap element.

As shown in Fig. 7, the power source-side winding 41 and the storage-side winding 51 may use windings in which two windings 41 a and 41 b and two windings 51 a and 51 b are respectively connected in series.

### (Fourth embodiment)

In the third embodiment, the modification example of the first embodiment has been described, but the same modification as in the third embodiment may also be performed in the second embodiment. In a fourth embodiment, such a modification example of the second embodiment will be described. Fig. 8 is a configuration diagram illustrating a charge storage system 3a in the fourth embodiment. The charging/discharging circuit 31 a of the charge storage system 3a is different from the charging/discharging circuit 31 of the second embodiment in the following two points (C) and (D). Since configurations other than the different points (C) and (D) may be the same as in the other embodiments, the different points will be mainly described.

(C) In the second embodiment, the switch element 52 is provided on the negative terminal of the storage 30 and the storage-side winding 51 is provided on the positive terminal of the storage 30, but in the second embodiment, the switch element 52 is provided on the positive terminal of the storage 30 and the storage-side winding 51 is provided on the negative terminal of the storage 30. In this case, the bypass line Lb2 is connected to the connection point 58 at one end thereof and is connected to the positive terminal of the storage 30 at the other end thereof (via a switch circuit 59 which will be described later) to bypass the winding 51 a and the switch element 52.

(D) In the second embodiment, when the storage 30 is charged, the electric current flows on the bypass line Lb2 using the diode 53, but in the second embodiment, the switch circuit 59 is provided and the electric current flows on the bypass line Lb2. Specifically, the switch circuit 59 is configured by an electromagnetic relay or the like that performs switching between two connection points, and switches the connection of the positive terminal of the storage 30 and the series line Ls2 (in discharging) and the connection of the positive terminal of the storage 30 and the bypass line Lb2 (in charging). Thus, it is possible to remove the diode 53 provided in the bypass line Lb2, and to reduce loss due to the diode 53 when the storage 30 is discharged.

The change of (D) is performed by switching the connection of the positive terminal of the storage 30 and the series line Ls2 (in discharging) and the connection of the positive terminal of the storage 30 and the bypass line Lb2 (in charging) according to the change of (C), but may be applied to the first embodiment where the change of (C) is not present. In this case, since the other end of the bypass line Lb1 is connected to the negative terminal of the storage 30 via the switch circuit 59, the switch circuit switches the connection of the negative terminal of the storage 30 and the series line Ls2 (in discharging) and the connection of the negative terminal of the storage 30 and the bypass line Lb2 (in charging).

In this way, when the modifications shown in (C) and (D) are performed, the turn ratio at the charging of the storage 30 is similarly larger than the turn ratio at the discharging of the storage 30. Thus, it is possible to reduce the voltage endurance of the switch element, the diode or the like connected to the storage-side winding 51. Further, it is possible to form the charge storage system 3a using a cheap element.

As shown in Fig. 8, similarly to the third embodiment, the power source-side winding 41 and the storage-side winding 51 may use windings in which two windings 41a and 41b and two windings 51 a and 51 b are respectively connected in series.

### (Fifth embodiment)

In the first to fourth embodiments, the charging/discharging circuit 31 of a storage system 7 has been described, but a modification example in which the charging/discharging circuit 31 is provided in the utility interconnection device 2 will be described as a fifth embodiment.

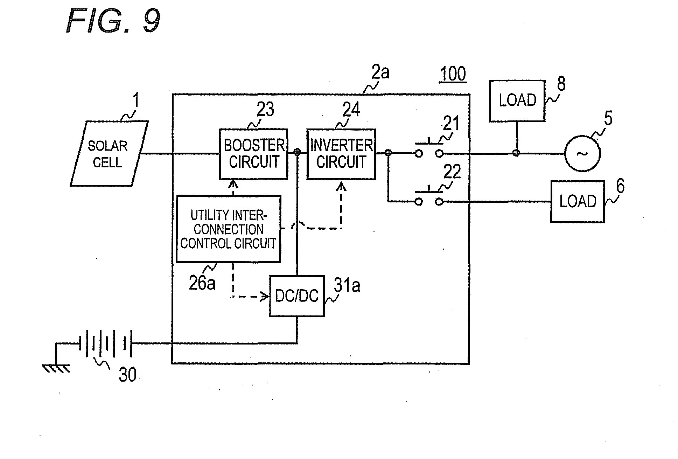

Fig. 9 is a configuration diagram illustrating a solar power generation system 100a in the fifth embodiment. As shown in Fig. 9, a utility interconnection device 2a includes a charging/discharging circuit 31 a connected between the booster circuit 23 and the inverter circuit 24. The charging/discharging circuit 31 a is different from the charging/discharging circuit 31 only in a connection location thereof and may be the same as in the charging/discharging circuit 31 in its other configurations. Further, a utility interconnection control circuit 26a, instead of the charge storage system control circuit 32, performs the control of the charging/discharging circuit 31.

The utility interconnection device 2 in the first and second embodiments detects the power outage using an individual operation detecting function (of an active type or passive type) or a power outage state detecting function provided therein.

With such a configuration, the utility interconnection device 2a receives, as inputs, the DC power output from the solar cell 1 and the DC power output from the storage 30, and converts at least one of the DC powers or a total power of the DC powers into AC power to add the result to the commercial power utility.

In the present embodiment, the charging/discharging circuit 31a is connected between the booster circuit 23 and the inverter circuit 24, but similarly to the other embodiments, a configuration in which the charging/discharging circuit 31 a is connected between the solar cell 1 and the booster circuit 23 and the power output from the charging/discharging circuit 31 a is converted into the AC power via the booster circuit 23 may be used.

Hereinbefore, the embodiments of the invention have been described, but the above description is made for ease of understanding of the invention, which does not limit the invention. Modifications and improvements may be made without departing from the spirit of the invention, which are included in the scope of the invention as equivalents.

For example, in the present embodiment, an example in which a lead storage battery is used as the storage 30 has been described, but, a lithium ion battery, a nickel hydrogen battery or the like may be used.

For example, in the present embodiment, an example in which the solar cell 1 is used as the DC power source 30, but a wind turbine generator, a fuel cell, a storage or the like may be used.

For example, in the present embodiment, a configuration in which two windings are connected in series with respect to the power source-side winding 41 and the storage-side winding 51 and the bypass lines Lb1 and Lb2 are connected to the connection points 48 and 59 to bypass the switch elements 42 and 52 is used. In this configuration, a configuration in which windings are branched from the middle of one winding by a sector tap may also be included.

For example, a configuration may be used in which the DC power from the charge storage system 3 can be supplied to the utility interconnection device 2, when the load 8 is large and the power supplied from the commercial power utility 5 exceeds a predetermined value, or in response to an arbitrary signal. Further, the timing when the DC output from the charge storage system 3 is supplied to the utility interconnection device 2 is not limited to an autonomous operation time, but may be arbitrarily set.

### Description of Reference Signs

- 1: Solar Cell
- 2: Utility Interconnection Device
- 3: Charge Storage System
- 5: Commercial Power Utility
- 6: Load
- 7: Line
- 8: Load
- 21: Utility Interconnection Relay
- 22: Autonomous Operation Relay
- 23: Booster Circuit
- 24: Inverter Circuit
- 25: Filter Circuit
- 26: Utility Interconnection Control Circuit
- 30: Storage
- 31: Charging/Discharging Circuit
- 32: Charge Storage System Control Circuit
- 33: Power Outage Detecting Circuit
- 40: Transformer
- 41: Power Source-Side Winding
- 42: Switch Element
- 43: Diode
- 44: Capacitor
- 45: Diode
- 51: Storage-Side Winding
- 52: Switch Element
- 53: Diode
- 54: Capacitor
- 55: Diode

## Claims

1. A charge storage system comprising:
a storage; and
a charging/discharging circuit configured to perform charging and discharging of the storage via a transformer,
wherein the charging/discharging circuit is connected to a device configured to convert DC power into AC power and output the converted AC power, and is configured to charge the DC power into the storage,
wherein the transformer comprises: a power source-side winding to which the DC power is input; and a storage-side winding connected to the storage, and
wherein the charging/discharging circuit is configured to change a turn ratio between the power source-side winding and the storage-side winding (= (the number of turns of the power source-side winding)/(the number of turns of the storage-side winding)) such that the turn ratio at the charging of the storage is larger than the turn ratio at the discharging of the storage.

2. The charge storage system according to claim 1,
wherein the power source-side winding includes two windings which are connected in series, and
wherein when the storage is discharged, the discharging is performed using one of the two windings, and when the storage is charged, the charging is performed using both of the two windings.

3. The charge storage system according to claim 2,
wherein the charging/discharging circuit comprises a series line on which the power source-side winding and a switch element are connected in series,
wherein one end and the other end of the series line are respectively connected to a positive-side line and a negative-side line of a DC power source,
wherein the charging/discharging circuit comprises a bypass line that connects a connection point of the two windings of the power source-side winding to the DC power source while bypassing the switch element,
wherein a diode configured to flow electric current from the negative-side line to the positive-side line is provided on the bypass line, and
wherein when the storage is charged, the switch element is set to be periodically conducting or non-conducting so as to periodically flow electric current through the two windings, and when the storage is discharged, the switch element is set to be non-conducting to flow electric current on the bypass line.

4. The charge storage system according to claim 1,
wherein the storage-side winding includes two windings which are connected in series, and
wherein when the storage is discharged, the discharging is performed using both of the two windings, and when the storage is charged, the charging is performed using one of the two windings.

5. The charge storage system according to claim 4,
wherein the charging/discharging circuit comprises a series line on which the storage-side winding and a switch element are connected in series,
wherein one end and the other end of the series line are respectively connected to a positive terminal and a negative terminal of the storage,
wherein the charging/discharging circuit comprises a bypass line that connects a connection point of the two windings of the storage-side winding to the storage while bypassing the switch element,
wherein a diode is configured to flow electric current from the negative terminal to the positive terminal is provided on the bypass line, and
wherein when the storage is charged, the switch element is set to be non-conducting so as to flow electric current on the bypass line, and when the storage is discharged, the switch element is set to be periodically conducting or non-conducting so as to periodically flow electric current through the two windings.

6. A charging/discharging circuit comprising a transformer and configured to perform charging and discharging of a storage,
wherein the transformer comprises: a power source-side winding to which DC power from a DC power source is input; and a storage-side winding connected to the storage, and
wherein the charging/discharging circuit is configured to change a turn ratio between the power source-side winding and the storage-side winding (= (the number of turns of the power source-side winding)/(the number of turns of the storage-side winding)) such that the turn ratio at the charging of the storage is larger than the turn ratio at the discharging of the storage.

7. A utility interconnection device for receiving DC power output from a DC power source and DC power output from a storage, for converting any one of the DC powers or total power of the DC powers into AC power, and for adding the converted AC power to a commercial power utility, said utility interconnection device comprising:
a charging/discharging circuit configured to perform charging and discharging of the storage via a transformer,
wherein the transformer comprises: a power source-side winding to which the DC power output from the DC power source is input; and a storage-side winding connected to the storage, and
wherein the charging/discharging circuit is configured to change a turn ratio between the power source-side winding and the storage-side winding (= (the number of turns of the power source-side winding)/(the number of turns of the storage-side winding)) such that the turn ratio at the charging of the storage is larger than the turn ratio at the discharging of the storage.
